# EUROPEAN PATENT SPECIFICATION

(11) **EP 1 334 281 B1**
(45) Date of publication and mention of the grant of the patent: **08.12.2004**
(21) Application number: 01958245.1
(22) Date of filing: 17.08.2001
(51) Int. Cl.: F16B 31/02

(54) **SHEARABLE FASTENER**
ABREISSBEFESTIGUNGSELEMENT
ELEMENT DE FIXATION DECHIRABLE

(30) Priority: 31.08.2000 GB 0201277
(43) Date of publication of application: 13.08.2003
(73) Proprietor: Tyco Electronics UK Limited, Swindon SN3 5HH (GB)
(72) Inventor: HOLLICK, David John, Chinnor Oxford OX9 34DZ (GB); BARNETT, Gary, Leicestershire LE65 1JH (GB)
(74) Representative: Jay, Anthony William
(86) International application number: PCT/GB2001/003738
(87) International publication number: WO 2002/018803

(56) References cited:
- WO-A-97/13982
- GB-A- 2 029 539
- GB-A- 2 295 871

## Description

This invention relates to a shearable fastener, and in particular to shearable bolts of utility in electrical connectors.

It is well known to use shearable bolts for the mechanical and electrical connection of electrical cables to electrical connectors. Such a connector commonly comprises a socket into which an end of the cable is inserted. The wall of the socket contains one or more threaded bores in which threaded bolts are received. Rotation of the bolt brings it into engagement with the cable, thereby clamping the cable to the opposite wall of the socket. By providing that the fastener (bolt) shears at a predetermined applied torque the exertion of excessive force on the cable is prevented.

A potential problem with the use of shearable fasteners is that when the predetermined applied torque is reached the fastener yields suddenly. This results in the user's arm moving in an uncontrolled and sudden manner, with a risk of damage to the muscles or other tissues of the upper arm, and/or a risk of impact of the lower arm or hand with surrounding obstructions. These dangers may be particularly acute where, as is often the case, the electrical connector is fitted in a confined space such as an excavated pit in a pavement or roadway or an underground chamber.

There has now been devised an improved form of shearable fastener that overcomes or substantially mitigates the above-mentioned disadvantages.

According to the invention, there is provided a shearable fastener comprising an operative part capable of clamping engagement with an object to be fastened and a shearable part adapted to shear from the operative part upon the application of a predetermined torque, wherein the operative part and the shearable part are joined by a restraining component effective to retard movement of the shearable part when the shearable part shears from the operative part.

The fastener according to the invention is advantageous primarily in that by retarding the motion of the shearable part when it shears from the operative part of the fastener, the restraining component reduces the risk of injury to the user of the fastener.

The operative part of the fastener is most commonly an externally-threaded shank, and the shearable part is a head configured for engagement with a suitable drive tool such as a socket wrench. The fastener thus most commonly has the form of a bolt. The head may have any suitable form, a square or hexagonal external shape being most preferred, though any non-circular form may be utilised for engagement of a drive tool with the exterior of the head. Alternatively, the head part of the fastener may be provided with an axial bore of non-circular (eg square or hexagonal) cross-section such that a drive tool such as an Allen key may be inserted into the bore to apply the necessary torque to the head part.

The shearable part is generally joined to the operative part at a shear plane defined by a local weakening in the fastener. Such a weakening most commonly takes the form of a narrowed neck or similar formation. There may be just one weakening or there may be a plurality of such weakenings, eg a plurality of shear planes arranged as described in British Patent No 2299640.

The restraining component may extend internally of the fastener, eg in a bore (which may be circular or shaped in section) extending from the shearable part into the operative part, or may be located externally of the fastener, eg as a collar or the like surrounding the point at which the shearable part shears, in use, from the operative part. In any event, the engagement of the restraining component with both shearable part and operative part is preferably sufficient tc inhibit movement of the shearable part away from the operative part when shearing takes place. This engagement may simply be a frictional engagement, eg where the restraining component fits closely in a bore extending between the shearable part and the operative part, provided that the engagement of the restraining component with both shearable part and operative part is sufficient to inhibit movement of the shearable part away from the operative part when shearing takes place. Alternatively, the restraining component may be bonded to one or both of the shearable part and the operative part, eg by means of adhesive.

The restraining component is preferably of a material which is capable of considerable angular deformation without shearing. This is in contrast to the shearable and operative parts of the fastener which will generally be formed integrally in a material (most commonly metal such as brass or aluminium) which yields without substantial angular deformation. In other applications (eg where electrical conductivity is not required), relatively brittle plastics material may be used for the shearable and operative parts of the fastener. Suitable materials for the restraining component include suitable plastics and elastomeric materials such as rubbers, as well as metals such as mild steel and annealed aluminium. Such materials as are capable of twisting without shearing may be particularly suitable, the torsion of the motion-damping component retarding the angular acceleration of the shearable part immediately after shearing has occurred.

According to another aspect of the invention, there is thus provided a shearable fastener comprising an operative part capable of clamping engagement with an object to be fastened and a shearable part adapted to shear from the operative part upon the application of a predetermined torque, the operative part and the shearable part being formed integrally and connected so as to shear with relatively low angular deformation, wherein the operative part and the shearable part are joined by a restraining component capable of relatively high angular deformation without shearing, said restraining component being effective to retard movement of the shearable part when the shearable part shears from the operative part.

The extent of angular deformation between the operative part and the shearable part of the fastener prior to shearing may be very low, eg less than 10°. The restraining component may be capable of twisting through a much greater angle, eg of the order of 10-20° or even more.

The restraining component may itself shear, or it may retain its integrity. In either case, however, shearing of the fastener takes place in a more controlled and smoother movement, as compared with the prior art, reducing the risk of injury to the user, as described above.

Embodiments of the invention will now be described in greater detail, by way of example only, with reference to the accompanying drawings, in which
Figure 1 is a side view in section of a first embodiment of a shearable bolt according to the invention;
Figure 2 is a plan view of the head part of the bolt of Figure 1;
Figure 3 is a view similar to Figure 1 of a second embodiment of a shearable bolt according to the invention;
Figure 4 is a view similar to Figure 1 of a third embodiment of a shearable bolt according to the invention;
Figure 5 is a plan view of the head part of the bolt of Figure 4;
Figure 6 is a view similar to Figure 1 of a fourth embodiment of a shearable bolt according to the invention; and
Figure 7 is a sectional view on the line VII-VII in Figure 6.

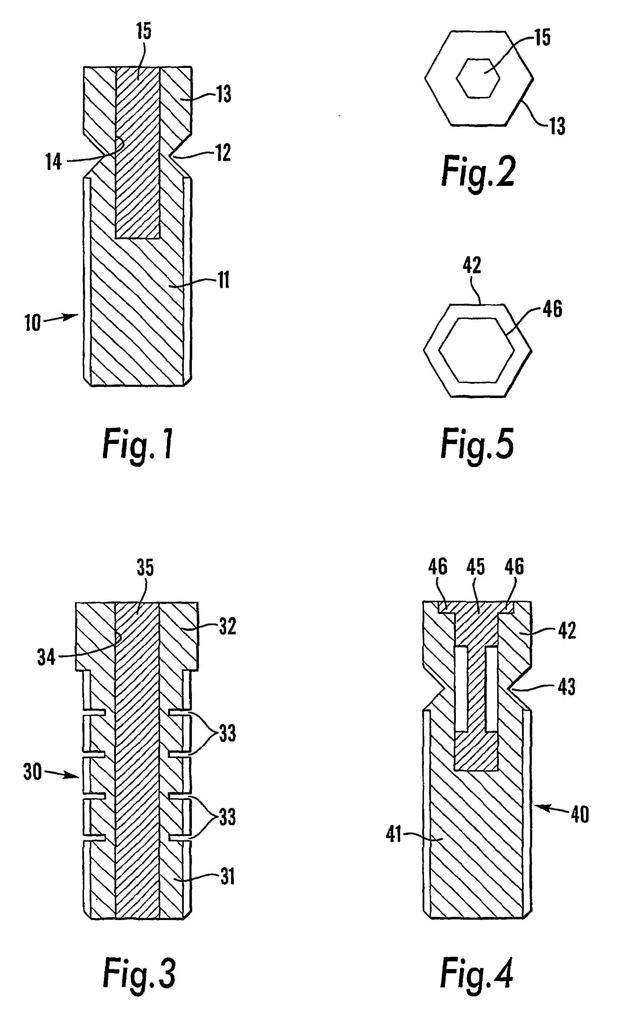

Referring first to Figure 1, a first embodiment of a shearable bolt according to the invention is generally designated 10. The bolt 10 comprises an externally threaded shank 11 which is connected by a narrowed neck 12 to a head part 13. As can be seen from Figure 2, the head part 13 is of hexagonal form.

The bolt 10 is used in conventional fashion. The shank 11 is engaged in a threaded bore in an electrical connector (not shown). Rotation of the bolt 10 brings its tip into clamping engagement with an electrical cable introduced into the connector. Continued rotation of the bolt 10 (eg by means of a suitable socket wrench or other tool applied to the hexagonal head part 13) increases the clamping force until a predetermined torque is reached. At that point, the bolt 10 shears at the neck 12, releasing the head part 13 from the shank 11.

As thus far described, the bolt 10 is identical to a conventional shearable bolt. Where the bolt 10 differs from a conventional bolt is in the provision of a central blind bore 14 that extends through the head part 13, past the neck 12 and a short distance into the threaded shank 11. The bore 14 is of hexagonal cross-section and is filled with a plug 15 of tough, elastomeric or soft metallic material.

The plug 15 is capable of considerable angular deformation under twisting or torsion. Thus, when the torque applied to the head part 13 of the bolt 10 exceeds the predetermined shearing torque, the neck 12 yields quite suddenly, but torsion of the plug 15 retards the consequential acceleration of the head part 13 and constrains its movement. The plug 15 thus acts as a restraining component. This leads to a considerably reduced risk of injury to the user.

After shearing, the head part 13 and the plug 15 can simply be pulled away from the shank 11.

The embodiment shown in Figure 3 (generally designated 30) differs from that of Figures 1 and 2 in that, instead of shearing at a neck between the threaded shank 31 and the head part 32, the bolt 30 shears at any one of several shear planes defined by four circumferential slits 33 which are axially spaced along the shank 31. The slits 33 define a series of shear planes, the torque necessary to cause the shank 31 to shear at each plane increasing from the plane nearest the tip of the shank 31 to that nearest the head part 32 of the bolt 30. In use, the shank 31 shears preferentially at the shear plane in the exposed part of the shank 31 that is closest to the external surface of the connector in which the bolt 30 is engaged (as described in British Patent No 2299640).

Once again, an axial bore 34 of hexagonal section is formed in the bolt 30 and this is filled with a plug 35 of elastomeric or soft metallic material which exerts a braking effect on the sheared part of the bolt 30 when the applied torque exceeds that at which shearing takes place. In this case, for the plug 35 to have its desired effect irrespective of the shear plane at which the shank 31 shears, the plug 35 must extend from the head part 32 to a point beyond the shear plane furthest from the head part 32. In practice, for reasons of manufacturing simplicity, the bore 34 extends right through the bolt 30, from the head part 32 to the tip of the shank 31.

As for the embodiment illustrated in Figures 1 and 2, when the shank 31 shears (irrespective of the particular shear plane at which shearing takes place), the plug 35 counteracts the acceleration of the sheared part of the bolt 30 (ie the head part 31 and the part of the shank 32 that extends as far as the shear plane), and reduces the movement of that sheared part. After shearing the plug 35 can be withdrawn from the bore 34 in the shank 31.

Turning now to Figures 4 and 5, a third embodiment of a bolt according to the invention is generally designated 40. This bolt 40 is broadly similar to the bolt 10 of Figures 1 and 2. The difference lies in the form of the plug 45 which links the threaded shank 41 and the head part 42. In this embodiment, the part of the plug 45 which extends through the neck 43 between the head part 42 and the shank 41 is of reduced diameter so that in the region at which shearing takes place the plug 45 is spaced from the internal wall of the bore 44. This reduces any tendency of the plug 45 to inhibit shearing, whilst still permitting the plug 45 to exert its restraining action on movement of the sheared head part 42. It also allows a wider choice of materials for the restraining component since its resilience can be tailored by adjusting its geometry.

A further difference from the embodiment of Figures 1 and 2 is that the plug 45 is formed with a hexagonal lip 46 around its upper periphery, this lip 46 being received within a correspondingly shaped recess formed in the upper surface of the head part 42. The provision of the lip 46 facilitates removal of the plug 45 from the bore 44 after the head part 42 has been sheared off, in that pulling the head part 42 away from the shank 41 necessarily causes the plug 45 to be withdrawn from the bore 44. Such a lip may be unnecessary if the plug 45 is itself designed to shear, or if suitable arrangements are made (eg roughening or knurling of the mating surfaces) to ensure tighter frictional fit of the plug in the head 42 than in the shank 41.

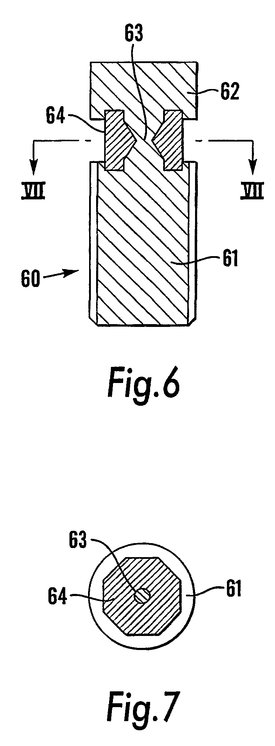

In the embodiment 60 of Figures 6 and 7 a threaded shank 61 is once again linked to a head part 62 by a narrowed neck 63. The neck is arranged to shear when a certain predetermined torque is applied to it. This embodiment 60 differs from those described above in that the restraining component is a collar 64 that surrounds the point at which the neck 63 shears, rather than extending through a bore within the bolt 60.

The collar 64 is of hexagonal cross-section and locates in correspondingly shaped recesses in the juxtaposed upper surface of the shank 61 and under surface of the head part 62. The collar 64 is most conveniently moulded around the neck 63, its engagement with the head part 62 and shank 61 being sufficiently close to limit movement of the head part 62 when the head part 62 shears off.

## Claims

1. A shearable fastener (10, 30, 40, 60) comprising an operative part (11, 31, 41, 61) capable of clamping engagement with an object to be fastened and a shearable part (13, 32, 42, 62) adapted to shear from the operative part (11, 31, 41, 61) upon the application of a predetermined torque, wherein the operative part (11, 31, 41, 61) and the shearable part (13, 32, 42, 62) are joined by a restraining component (15, 35, 45, 64) effective to retard movement of the shearable part (13, 32, 42, 62) when the shearable part (13, 32, 42, 62) shears from the operative part (11, 31, 41, 61).

2. A fastener (10, 30, 40, 60) as claimed in Claim 1, wherein the operative part (11, 31, 41, 61) of the fastener (10, 30, 40, 60) is an externally-threaded shank (11, 31, 41, 61), and the shearable part (13, 32, 42, 62) is a head configured for engagement with a drive tool.

3. A fastener (10, 30, 40, 60) as claimed in Claim 2, wherein the head (13, 32, 42, 62) has a square or hexagonal external shape.

4. A fastener (10, 30, 40, 60) as claimed in Claim 2, wherein the head part (13, 32, 42, 62) of the fastener (10, 30, 40, 60) is provided with an axial bore of non-circular cross-section.

5. A fastener (10, 30, 40, 60) as claimed in any preceding claim, wherein the shearable part (13, 32, 42, 62) is joined to the operative part (11, 31, 41, 61) at a shear plane defined by a local weakening (12, 33, 43, 63) in the fastener (10, 30, 40, 60).

6. A fastener (10, 30, 40, 60) as claimed in Claim 5, wherein the weakening (12, 33, 43, 63) takes the form of a narrowed neck (12, 43, 63).

7. A fastener (10, 30, 40, 60) as claimed in any preceding claim, wherein the restraining component (15, 35, 45, 64) extends internally of the fastener (10, 30, 40, 60).

8. A fastener (10, 30, 40, 60) as claimed in Claim 7, wherein the restraining component (15, 35, 45, 64) occupies a bore extending from the shearable part (13, 32, 42, 62) into the operative part (11, 31, 41, 61).

9. A fastener (10, 30, 40, 60) as claimed in Claim 8, wherein the restraining component (15, 35, 45, 64) is of reduced dimension in the region at which the shearable part (13, 32, 42, 62) shears from the operative part (11, 31, 41, 61).

10. A fastener (10, 30, 40, 60) as claimed in any one of claims 1-5, wherein the restraining component (15, 35, 45, 64) is located externally of the fastener (10, 30, 40, 60).

11. A fastener (10, 30, 40, 60) as claimed in Claim 10, wherein the restraining component (15, 35, 45, 64) is a collar or the like surrounding the point at which the shearable part (13, 32, 42, 62) shears, in use, from the operative part (11, 31, 41, 61).

12. A fastener (10, 30, 40, 60) as claimed in any preceding claim, wherein the engagement of the restraining component (15, 35, 45, 64) with both shearable part (13, 32, 42, 62) and operative part (11, 31, 41, 61) is a frictional engagement.

13. A fastener (10, 30, 40, 60) as claimed in any one of Claims 1 to 11, wherein the restraining component (15, 35, 45, 64) is bonded to one or both of the shearable part (13, 32, 42, 62) and the operative part (11, 31, 41, 61).

14. A fastener (10, 30, 40, 60) as claimed in any preceding claim, wherein the restraining component (15, 35, 45, 64) is of a material which is capable of considerable angular deformation without shearing, and the shearable (13, 32, 42, 62) and operative parts (11, 31, 41, 61) of the fastener are formed integrally in a material which yields without substantial angular deformation.

15. A fastener (10, 30, 40, 60) as claimed in Claim 14 wherein the extent of angular deformation between the operative part (11, 31, 41, 61) and the shearable part (13, 32, 42, 62) of the fastener (10, 30, 40, 60) prior to shearing is less than 10°.

16. A fastener (10, 30, 40, 60) as claimed in Claim 14, wherein the restraining component (15, 35, 45, 64) is capable of twisting through an angle of up to 20°.

17. A fastener (10, 30, 40, 60) as claimed in any preceding claim, wherein the restraining component (15, 35, 45, 64) shears after shearing of the shearable part (13, 32, 42, 62) from the operative part (11, 31, 41, 61).

18. A fastener (10, 30, 40, 60) as claimed in any one of Claims 1 to 16, wherein the restraining component (15, 35, 45, 64) retains its integrity after shearing of the shearable part (13, 32, 42, 62) from the operative part (11, 31, 41, 61).

19. A fastener (10, 30, 40, 60) as claimed in any preceding claim, wherein the restraining component (15, 35, 45, 64) is formed in a material selected from the group consisting of plastics materials, elastomeric materials, and metals.

## Patentansprüche

1. Abscherbares Befestigungselement (10, 30, 40, 60), das einen wirksamen Teil (11, 31, 41, 61), in der Lage zum Klemmeingriff mit einem zu befestigenden Gegenstand, und einen abscherbaren Teil (13, 32, 42, 62), dazu geeignet, beim Ausüben eines vorher festgelegten Drehmoments vom wirksamen Teil (11, 31, 41, 61) abzuscheren, umfaßt, bei dem der wirksame Teil (11, 31, 41, 61) und der abscherbare Teil (13, 32, 42, 62) durch eine Haltekomponente (15, 35, 45, 64) verbunden werden, wirksam zum Verzögern einer Bewegung des abscherbaren Teils (13, 32, 42, 62), wenn der abscherbare Teil (13, 32, 42, 62) vom wirksamen Teil (11, 31, 41, 61) abschert.

2. Befestigungselement (10, 30, 40, 60) nach Anspruch 1, bei dem der wirksame Teil (11, 31, 41, 61) des Befestigungselements (10, 30, 40, 60) ein Außengewindeschaft (11, 31, 41, 61) ist und der abscherbare Teil (13, 32, 42, 62) ein Kopf ist, konfiguriert zum Eingriff mit einem Eindrehwerkzeug.

3. Befestigungselement (10, 30, 40, 60) nach Anspruch 2, bei dem der Kopf (13, 32, 42, 62) eine quadratische oder sechseckige Außenform hat.

4. Befestigungselement (10, 30, 40, 60) nach Anspruch 2, bei dem der Kopfteil (13, 32, 42, 62) des Befestigungselements (10, 30, 40, 60) mit einer Axialbohrung mit nicht kreisförmigem Querschnitt versehen wird.

5. Befestigungselement (10, 30, 40, 60) nach einem der vorhergehenden Ansprüche, bei dem der abscherbare Teil (13, 32, 42, 62) an einer Scherebene, definiert durch eine örtliche Schwächung (12, 33, 43, 63) im Befestigungselement (10, 30, 40, 60), mit dem wirksamen Teil (11, 31, 41, 61) verbunden wird.

6. Befestigungselement (10, 30, 40, 60) nach Anspruch 5, bei dem die Schwächung (12, 33, 43, 63) die Form eines verengten Halses (12, 43, 63) annimmt.

7. Befestigungselement (10, 30, 40, 60) nach einem der vorhergehenden Ansprüche, bei dem die Haltekomponente (15, 35, 45, 64) innerhalb des Befestigungselements (10, 30, 40, 60) verläuft.

8. Befestigungselement (10, 30, 40, 60) nach Anspruch 7, bei dem die Haltekomponente (15, 35, 45, 64) eine Bohrung einnimmt, die sich vom abscherbaren Teil (13, 32, 42, 62) in den wirksamen Teil (11, 31, 41, 61) erstreckt.

9. Befestigungselement (10, 30, 40, 60) nach Anspruch 8, bei dem die Haltekomponente (15, 35, 45, 64) in dem Bereich, an dem der abscherbare Teil (13, 32, 42, 62) vom wirksamen Teil (11, 31, 41, 61) abschert, eine verringerte Abmessung hat.

10. Befestigungselement (10, 30, 40, 60) nach einem der Ansprüche 1 bis 5, bei dem die Haltekomponente (15, 35, 45, 64) außerhalb des Befestigungselements (10, 30, 40, 60) angeordnet wird.

11. Befestigungselement (10, 30, 40, 60) nach Anspruch 10, bei dem die Haltekomponente (15, 35, 45, 64) ein Bund oder dergleichen ist, der den Punkt umschließt, an dem der abscherbare Teil (13, 32, 42, 62) bei Anwendung vom wirksamen Teil (11, 31, 41, 61) abschert.

12. Befestigungselement (10, 30, 40, 60) nach einem der vorhergehenden Ansprüche, bei dem der Eingriff der Haltekomponente (15, 35, 45, 64) sowohl mit dem abscherbaren Teil (13, 32, 42, 62) als auch mit dem wirksamen Teil (11, 31, 41, 61) ein Reibungseingriff ist.

13. Befestigungselement (10, 30, 40, 60) nach einem der Ansprüche 1 bis 11, bei dem die Haltekomponente (15, 35, 45, 64) mit einer oder beiden der Komponenten abscherbarer Teil (13, 32, 42, 62) und wirksamer Teil (11, 31, 41, 61) verbunden wird.

14. Befestigungselement (10, 30, 40, 60) nach einem der vorhergehenden Ansprüche, bei dem die Haltekomponente (15, 35, 45, 64) aus einem Material besteht, das ohne Abscheren zu einer beträchtlichen Winkelverformung in der Lage ist, und der abscherbare (13, 32, 42, 62) und der wirksame Teil (11, 31, 41, 61) des Befestigungselements integral aus einem Material hergestellt werden, das ohne wesentliche Winkelverformung nachgibt.

15. Befestigungselement (10, 30, 40, 60) nach Anspruch 14, bei dem das Maß der Winkelverformung zwischen dem wirksamen Teil (11, 31, 41, 61) und dem abscherbaren Teil (13, 32, 42, 62) des Befestigungselements (10, 30, 40, 60) vor dem Abscheren weniger als 10° beträgt.

16. Befestigungselement (10, 30, 40, 60) nach Anspruch 14, bei dem die Haltekomponente (15, 35, 45 64) dazu in der Lage ist, sich um einem Winkel von bis zu 20° zu verdrehen.

17. Befestigungselement (10, 30, 40, 60) nach einem der vorhergehenden Ansprüche, bei dem die Haltekomponente (15, 35, 45, 64) nach dem Abscheren des abscherbaren Teils (13, 32, 42, 62) vom wirksamen Teil (11, 31, 41, 61) abschert.

18. Befestigungselement (10, 30, 40, 60) nach einem der Ansprüche 1 bis 16, bei dem die Haltekomponente (15, 35, 45, 64) nach dem Abscheren des abscherbaren Teils (13, 32, 42, 62) vom wirksamen Teil (11, 31, 41, 61) ihre Integrität bewahrt.

19. Befestigungselement (10, 30, 40, 60) nach einem der vorhergehenden Ansprüche, bei dem die Haltekomponente (15, 35, 45, 64) aus einem Material, ausgewählt aus der Gruppe, die aus Plastikmaterialien, Elastomermaterialien und Metallen besteht, hergestellt wird.

## Revendications

1. Elément de fixation à cisaillement (10, 30, 40, 60) comprenant une partie opérationnelle (11, 31, 41, 61) pouvant être engagée par serrage dans un objet devant être fixé, et une partie à cisaillement (13, 32, 42, 62) destinée à être séparée par cisaillement de la partie opérationnelle (11, 31, 41, 61) lors de l'application d'un couple prédéterminé, la partie opérationnelle (11, 31, 41, 61) et la partie à cisaillement (13, 32, 42, 62) étant reliées par un composant de retenue (15, 35, 45, 64) destiné à retarder le déplacement de la partie à cisaillement (13, 32, 42, 62) lorsque la partie à cisaillement (13, 32, 42, 62) est séparée par cisaillement de la partie opérationnelle (11, 31, 41, 61).

2. Elément de fixation (10, 30, 40, 60) selon la revendication 1, dans lequel la partie opérationnelle (11, 31, 41, 61) de l'élément de fixation (10, 30, 40, 60) et constituée par une tige à filetage externe, la partie à cisaillement (13, 32, 42, 62) étant constituée par une tête destinée à s'engager dans un outil d'enfoncement.

3. Elément de fixation (10, 30, 40, 60) selon la revendication 2, dans lequel la tête (13, 32, 42, 62) a une forme externe carrée ou hexagonale.

4. Elément de fixation (10, 30, 40, 60) selon la revendication 2, dans lequel la partie de tête (13, 32, 42, 62) de l'élément de fixation (10, 30, 40, 60) comporte un alésage axial à section transversale non circulaire.

5. Elément de fixation (10, 30, 40, 60) selon l'une quelconque des revendications précédentes, dans lequel la partie à cisaillement (13, 32, 42, 62) est reliée à la partie opérationnelle (11, 31, 41, 61) au niveau d'un plan de cisaillement défini par un affaiblissement local (12, 33, 43, 63) dans l'élément de fixation (10, 30, 40, 60).

6. Elément de fixation (10, 30, 40, 60) selon la revendication 5, dans lequel l'affaiblissement (12, 33, 43, 63) a la forme d'un col rétréci (12, 43, 63).

7. Elément de fixation (10, 30, 40, 60) selon l'une quelconque des revendications précédentes, dans lequel le composant de retenue (15, 35, 45, 64) s'étend à l'intérieur de l'élément de fixation (10, 3 0, 40, 60).

8. Elément de fixation (10, 30, 40, 60) selon la revendication 7, dans lequel le composant de retenue (15, 35, 45, 64) occupe un alésage s'étendant de la partie à cisaillement (13, 32, 42, 62) dans la partie opérationnelle (11, 31, 41, 61).

9. Elément de fixation (10, 30, 40, 60) selon la revendication 8, dans lequel le composant de retenue (15, 35, 45, 64) a une dimension réduite dans la région où la partie à cisaillement (13, 32, 42, 62) est séparée par cisaillement de la partie opérationnelle (11, 31,41,61).

10. Elément de fixation (10, 30, 40, 60) selon l'une quelconque des revendications 1 à 5, dans lequel le composant de retenue (15, 35, 45, 64) est agencé à l'extérieur de l'élément de fixation (10, 30, 40, 60).

11. Elément de fixation (10, 30, 40, 60) selon la revendication 10, dans lequel le composant de retenue (15, 35, 45, 64) est constitué par un collier ou un élément similaire entourant le point au niveau duquel la partie à cisaillement (13, 32, 42, 62)est séparée en service par cisaillement de la partie opérationnelle (11, 31, 41, 61).

12. Elément de fixation (10, 30, 40, 60) selon l'une quelconque des revendications précédentes, dans lequel l'engagement du composant de retenue (15, 35, 45, 64) dans la partie à cisaillement (13, 32, 42, 62) et la partie opérationnelle (11, 31, 41, 61) est un engagement par frottement.

13. Elément de fixation (10, 30, 40, 60) selon l'une quelconque des revendications 1 à 11, dans lequel le composant de retenue (15, 35, 45, 64) est relié à la partie à cisaillement (13, 32, 42, 62) ou à la partie opérationnelle (11, 31, 41, 61) ou à ces deux parties.

14. Elément de fixation (10, 30, 40, 60) selon l'une quelconque des revendications précédentes, dans lequel le composant de retenue (15, 35, 45, 64) est composé d'un matériau se prêtant à une déformation angulaire considérable sans cisaillement, les parties à cisaillement (13, 32, 42, 62) et opérationnelle (11, 31, 41, 61) de l'élément de fixation étant formées d'une seule pièce à partir d'un matériau se fléchissant sans déformation angulaire notable.

15. Elément de fixation (10, 30, 40, 60) selon la revendication 14, dans lequel l'extension de la déformation angulaire entre la partie opérationnelle (11, 31, 41, 61) et la partie à cisaillement (13, 32, 42, 62) de l'élément de fixation (10, 30, 40, 60) avant le cisaillement est inférieure à 10°.

16. Elément de fixation (10, 30, 40, 60) selon la revendication 14, dans lequel le composant de retenue (15, 35, 45, 64) se prête à une torsion à travers un angle atteignant 20° .

17. Elément de fixation (10, 30, 40, 60) selon l'une quelconque des revendications précédentes, dans lequel le composant de retenue (15, 35, 45, 64) est cisaillé après la séparation par cisaillement de la partie à cisaillement (13, 32, 42, 62) de la partie opérationnelle (11, 31, 41, 61).

18. Elément de fixation (10, 30, 40, 60) selon l'une quelconque des revendications 1 à 16, dans lequel le composant de retenue (15, 35, 45, 64) maintient son intégrité après la séparation par cisaillement de la partie à cisaillement (13, 32, 42, 62) de la partie opérationnelle (11, 31, 41, 61).

19. Elément de fixation (10, 30, 40, 60) selon l'une quelconque des revendications précédentes, dans lequel le composant de retenue (15, 35, 45, 64) est composé d'un matériau sélectionné dans le groupe constitué de matériaux plastiques, de matériaux élastomères et de métaux.
